# FASCICULE DE BREVET EUROPEEN

(11) **EP 3 024 201 B1**
(45) Date de publication et mention de la délivrance du brevet: **04.09.2019**
(21) Numéro de dépôt: 15195110.0
(22) Date de dépôt: 18.11.2015
(51) Int. Cl.: H04L 29/12

(54) **PROCEDE D'AFFECTATION D'UNE ADRESSE RESEAU A UN EQUIPEMENT TERMINAL DU RESEAU, RESEAU, EQUIPEMENT DE CONNEXION, SERVEUR D'ADRESSAGE ET EQUIPEMENT TERMINAL ASSOCIES**
ZUORDNUNGSVERFAHREN EINER NETZADRESSE ZU EINEM ENDGERÄT DES NETZES, ENTSPRECHENDES NETZ, VERBINDUNGSGERÄT, ENDGERÄT UND ENTSPRECHENDER ADRESSIERUNGSSERVER
METHOD FOR ASSIGNING A NETWORK ADDRESS TO A NETWORK TERMINAL DEVICE, ASSOCIATED NETWORK, CONNECTION DEVICE, ADDRESSING SERVER AND TERMINAL DEVICE

(30) Priorité: 20.11.2014 FR 1461276
(43) Date de publication de la demande: 25.05.2016
(73) Titulaire: BULL SAS, 78340 Les Clayes sous Bois (FR)
(72) Inventeur: GARRIGUES, Philippe, 38330 Montbonnot (FR); WELTERLEN, Benoît, 38000 Grenoble (FR); BOURDE, Céline, 38600 Fontaine (FR)
(74) Mandataire: Cabinet Plasseraud

(56) Documents cités:
- EP-A1- 1 558 002
- US-A1- 2008 025 299
- US-A1- 2010 091 779
- PATRICK MOTOROLA BCS M: "DHCP Relay Agent Information Option; rfc3046.txt", 20010101, 1 janvier 2001 (2001-01-01), XP015008829, ISSN: 0000-0003
- DROMS BUCKNELL UNIVERSITY R: "Dynamic Host Configuration Protocol; rfc2131.txt", 19970301, 1 mars 1997 (1997-03-01), XP015007915, ISSN: 0000-0003

## Description

### DOMAINE DE L'INVENTION

L'invention concerne un procédé d'affectation d'une adresse réseau à un équipement terminal d'un réseau, le réseau dans lequel est réalisée une affectation d'une adresse réseau à un équipement terminal de ce réseau, un équipement de connexion d'un réseau dans lequel est réalisée une affectation d'une adresse réseau à un équipement terminal de ce réseau, un serveur d'adressage d'un réseau dans lequel est réalisée une affectation d'une adresse réseau à un équipement terminal de ce réseau, un équipement terminal d'un réseau auquel est affectée une adresse réseau.

### CONTEXTE DE L'INVENTION

Selon un art antérieur, il est connu un réseau Ethernet dans lequel les adresses IP (IP pour « Internet Protocol » en langue anglaise) sont affectées aux équipements terminaux de ce réseau Ethernet, en utilisant le protocole DHCP (DHCP pour « Dynamic Host Configuration Protocol » en langue anglaise), à l'aide de leurs identifiants uniques respectifs de fabrication qui sont leurs adresses MAC respectives (MAC pour « Media Access Control » en langue anglaise). Ce processus d'adressage fonctionne de la manière suivante.

Dans ce réseau Ethernet, chaque équipement terminal qui dispose d'une carte réseau Ethernet, lors de son démarrage, s'annonce sur ce réseau Ethernet, en utilisant le protocole DHCP.

Un serveur d'adressage, qui est en permanence à l'écoute de ce protocole DHCP et qui surveille donc l'envoi de toute requête d'adresse IP dans ce protocole DHCP par un équipement terminal du réseau Ethernet, est configuré pour répondre cet équipement terminal en lui affectant dynamiquement une adresse IP qui deviendra son adresse IP et qui le restera tant que cet équipement terminal restera dans ce réseau Ethernet.

L'identité d'un équipement terminal du réseau Ethernet est définie par son adresse physique unique sur ce réseau Ethernet qui est son adresse MAC. Afin de respecter les exigences de sécurité requises pour éviter les dysfonctionnements de réseau liés à des affectations d'adresse IP incorrectes ou aléatoires, le serveur d'adressage est configuré de manière à n'attribuer une adresse IP à un équipement terminal que si une condition de sécurité est respectée. Cette condition de sécurité est respectée si l'adresse MAC de cet équipement terminal est préalablement connue du serveur d'adressage lequel peut alors identifier cet équipement terminal lors de son démarrage sur le réseau Ethernet.

Lorsque l'ensemble des équipements terminaux d'un réseau Ethernet est agrégé pour former un supercalculateur, et que le nombre de ces équipements devient très important, alors le nombre d'adresses MAC, à collecter, à répertorier et à gérer, devient lui aussi très important. Pour fonctionner correctement et pouvoir affecter les adresses IP requises aux équipements terminaux du réseau Ethernet, le serveur d'adressage doit alors connaître la liste exhaustive de l'ensemble des adresses MAC respectives de l'ensemble des équipements terminaux du réseau Ethernet. Cette connaissance exhaustive demande une configuration dédiée, longue et complexe, du serveur d'adressage.

Lors de l'installation d'un tel réseau Ethernet pour former un supercalculateur, plusieurs phases sont réalisées.

Une première phase d'installation comprend l'installation physique et le démarrage électrique de tous les éléments du réseau Ethernet, notamment les équipements de connexion (encore appelés « switchs » en langue anglaise) et les équipements terminaux.

Une deuxième phase d'installation comprend la configuration du coeur du réseau Ethernet incluant notamment la configuration des VLAN (VLAN pour « Very Large Area Network » en langue anglaise) et le routage IP.

Une troisième phase d'installation comprend l'adressage IP des différents équipements connectés au réseau Ethernet, lequel adressage IP est réalisé avec l'utilisation du protocole DHCP. Pour cela, la connaissance exhaustive, par le serveur d'adressage, de toutes les adresses MAC, peut être obtenue soit par l'exécution d'un outil automatique de récolte, soit par l'insertion directe depuis une liste d'adresses MAC préalablement connue et répertoriée. L'adressage IP est réalisé par une session de type DORA (« Découverte / Offre / Requête / Accusé de réception », DORA pour « Discovery / Offer / Request / Acknowledge » en langue anglaise) selon le protocole DHCP. A la fin de cette session DORA, l'équipement terminal du réseau Ethernet a obtenu son adresse IP lui permettant de fonctionner correctement au sein de ce réseau Ethernet.

Par ailleurs, lors d'une défaillance matérielle, par exemple d'un équipement terminal, tout le processus de collecte et de gestion de l'adresse MAC de l'équipement terminal remplaçant l'équipement défectueux doit être relancé, et le serveur d'adressage est reconfiguré de manière à intégrer cette nouvelle adresse MAC. Le nombre de pannes parmi les équipements terminaux de ce réseau Ethernet peut toucher 3 à 5% des équipements terminaux pendant la durée de vie de ce réseau Ethernet, ce qui correspond à un nombre de pannes notable dans l'absolu puisque le nombre d'équipements terminaux contenus dans ce réseau Ethernet peut vite devenir très important et valoir de quelques milliers à quelques dizaines de milliers d'équipements terminaux, typiquement entre 5000 et 50000 équipements terminaux.

Que ce soit lors de l'installation du réseau, ou bien lors de la maintenance de ce réseau lors de défaillances matérielles, l'utilisation des adresses MAC, utiles en tant qu'identifiants uniques des équipements du réseau, présente plusieurs inconvénients.

D'abord, le processus de collecte et de gestion de ces adresses MAC est très long, et il peut devenir d'autant plus long que le nombre d'équipements au sein du réseau est important, ce qui est notamment le cas d'un réseau configuré pour fonctionner en supercalculateur. Notamment, la phase de découverte des adresses MAC est particulièrement longue et empirique.

Ensuite, dès lors que différents types d'équipements vont coexister au sein du réseau, ce qui peut arriver fréquemment, le processus de collecte et de gestion des adresses MAC va devoir être adapté pour chaque type d'équipement, rendant ce même processus assez hétérogène, donc plus complexe à mettre en oeuvre.

Le document RFC 3046 "DHCP Relay Agent Information Option" divulgue un agent relay, qui ajoute son adresse IP à une requête DHCP.

Le document US 20080025299 divulgue plusieur niveau des agent relay DHCP.

### RESUME DE L'INVENTION

Le but de la présente invention est de fournir un procédé d'affectation d'adresse réseau aux équipements du réseau, palliant au moins partiellement les inconvénients précités de l'art antérieur.

Plus particulièrement, l'invention vise à fournir un procédé d'affectation d'adresse réseau aux équipements du réseau qui, tout en respectant les exigences de sécurité requises, soit d'une part plus rapide et d'autre part plus homogène donc moins dépendant de la diversité des équipements au sein du réseau.

Pour cela, au lieu d'utiliser l'identifiant unique de fabrication de l'équipement requérant une adresse réseau nécessitant sa collecte préalable longue et complexe, l'invention propose de déterminer la localisation de l'équipement requérant une adresse réseau et d'utiliser cette localisation pour lui affecter son adresse réseau, de manière plus rapide et/ou plus simple.

Le gain en rapidité d'adressage réseau est d'autant plus intéressant que le réseau comprend beaucoup d'équipements. Le gain de temps va pouvoir être effectif aussi bien lors de l'installation initiale du réseau en configuration de calculateur ou de supercalculateur que lors de la maintenance au fil du temps et au fil de la survenue des défaillances matérielles au sein du réseau.

Le gain en homogénéité d'adressage réseau est d'autant plus intéressant que le réseau comprend une diversité élevée de types d'équipement.

Lors de l'installation du réseau, la connaissance de la cartographie du réseau, c'est-à-dire de l'organisation et de la répartition des équipements au sein du réseau, permet de localiser facilement l'équipement requérant une adresse réseau et de lui affecter simplement son adresse réseau grâce à l'utilisation de sa localisation au sein du réseau.

La localisation au sein du réseau comprend une information géographique ou topologique concernant l'endroit où est situé l'équipement requérant. Cette localisation sera suffisamment précise pour constituer un élément différenciateur unique permettant de distinguer et de singulariser l'équipement requérant une adresse réseau parmi tous les équipements du réseau.

Le réseau peut avantageusement être un réseau Ethernet, mais aussi un autre type de réseau. L'adresse réseau requise peut avantageusement être une adresse IP, mais aussi un autre type d'adresse réseau. Le protocole de communication entre l'équipement requérant une adresse réseau et le serveur d'adressage peut avantageusement être le protocole DHCP, mais aussi un autre type de protocole.

A cette fin, la présente invention propose un procédé d'affectation, selon la revendication 1.

A cette fin, la présente invention propose aussi un réseau selon la revendication 10.

Il est également décrit un équipement de connexion de réseau : comprenant plusieurs ports de connexion par lesquels sont destinés à être connectés audit équipement de connexion, au moins plusieurs équipements terminaux dudit réseau, étant adapté pour recevoir de l'un desdits équipements terminaux, de préférence de chacun desdits équipements terminaux, une requête d'adresse réseau, étant adapté pour déterminer une localisation dudit équipement terminal dont il a reçu ladite requête, ladite localisation associant un identifiant topologique dudit équipement de connexion avec au moins un identifiant du port de connexion par lequel ledit équipement terminal est connecté audit équipement de connexion, étant adapté pour transmettre ladite requête avec ladite localisation, vers un serveur d'adressage dudit réseau qui est adapté pour affecter, audit équipement terminal, ladite adresse réseau à partir de ladite localisation.

Un équipement de connexion peut aussi comprendre un ou plusieurs ports de connexion par lesquels sont destinés à être connectés audit équipement de connexion, un ou plusieurs autres équipements de connexion.

Il est également décrit un serveur d'adressage de réseau : étant adapté pour recevoir d'un équipement de connexion dudit réseau, une requête d'adresse réseau envoyée par un équipement terminal dudit réseau connecté audit équipement de connexion et associée, par ledit équipement de connexion, à une localisation dudit équipement terminal, étant adapté pour affecter ladite adresse réseau à partir de ladite localisation, ladite localisation associant un identifiant topologique dudit équipement de connexion avec au moins un identifiant du port de connexion par lequel ledit équipement terminal est connecté audit équipement de connexion.

Il est également décrit un équipement terminal de réseau, étant destiné à être connecté à un équipement de connexion dudit réseau comprenant un serveur d'adressage, par un des ports de connexion dudit équipement de connexion, et étant adapté : pour envoyer une requête d'adresse réseau audit équipement de connexion sans spécifier son identifiant unique d'équipement terminal, pour recevoir ladite adresse réseau affectée par ledit serveur d'adressage sans utilisation dudit identifiant unique.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un quelconque des objets de l'invention précédemment présentés.

Ledit envoi de ladite requête d'adresse réseau audit équipement de connexion est effectué automatiquement par ledit équipement terminal. Ainsi, le serveur d'adressage n'a qu'à répondre aux requêtes qu'il reçoit sans devoir à son initiative balayer l'ensemble des équipements terminaux du réseau.

De préférence, ledit envoi de ladite requête d'adresse réseau audit équipement de connexion est effectué automatiquement par ledit équipement terminal dès l'intégration dudit équipement terminal audit réseau. Ainsi, en cas de remplacement d'un équipement terminal par un autre, l'équipement terminal remplaçant effectue automatiquement, et à son initiative, sa requête d'adresse réseau dès son intégration dans le réseau, afin de devenir opérationnel le plus rapidement possible.

De préférence, ledit réseau comprend une base de données qui stocke, pour au moins l'un desdits équipements terminaux, de préférence pour plusieurs desdits équipements terminaux ou pour la majorité desdits équipements terminaux, encore plus de préférence pour tous lesdits équipements terminaux, une correspondance entre ladite localisation et ladite adresse réseau, ledit serveur d'adressage envoie ladite localisation à ladite base de données, ladite base de données renvoie ladite adresse réseau audit serveur d'adressage. Grâce à cette base de données, la seule information que le serveur ait besoin de recevoir en provenance de l'équipement terminal est sa localisation, localisation que les équipements de connexion connaissent et peuvent facilement faire remonter vers le serveur d'adressage en l'ajoutant à la requête d'adresse réseau qu'ils font remonter également vers le serveur d'adressage.

De préférence, ledit serveur d'adressage renvoie ladite adresse réseau audit équipement terminal, en réponse à ladite requête, via ledit équipement de connexion. L'adresse réseau affectée redescend ainsi du serveur d'adressage vers l'équipement terminal par le même canal de communication que celui par lequel la requête d'adresse réseau était montée de l'équipement terminal vers le serveur d'adressage.

De préférence, lors de ladite détermination, ladite localisation associe un identifiant topologique dudit équipement de connexion avec un identifiant dudit port de connexion et avec une discrimination entre plusieurs équipements terminaux connectés audit équipement de connexion par ledit même port de connexion, de préférence une discrimination entre serveur de calcul et contrôleur matériel dudit serveur de calcul connectés par un même port de connexion audit équipement de connexion. Ainsi la localisation est complète et univoque. En effet, d'une part le serveur d'adressage connaît préalablement la localisation de l'équipement de connexion et d'autre part la connaissance à la fois du port de connexion de cet équipement de connexion auquel est rattaché l'équipement terminal et du type d'équipement terminal, à savoir équipement de traitement de données (serveur de calcul ou mémoire de stockage) ou contrôleur matériel de cet équipement de traitement de données tous deux connectés au même port de connexion, permet une localisation exacte de l'équipement terminal. Dans le protocole DHCP, les options 60 et 61 sont prévues pour indiquer s'il s'agit d'un équipement de traitement de données ou de son contrôleur matériel. Ainsi, la discrimination entre les deux peut être aisément réalisée.

Un autre réseau parallèle, distinct dudit réseau, physiquement distinct dudit réseau, est utilisé pour configurer lesdits identifiants topologiques des différents équipements de connexion dudit réseau. Ce réseau parallèle (de type « sideband » en langue anglaise) est de préférence un réseau dédié pour configurer les paramètres de localisation des équipements connexion. C'est un réseau point à point qui présente une cohérence de câblage certaine, rendant ainsi la localisation des équipements de connexion ainsi que l'ensemble du procédé d'affectation d'adresse réseau très robustes par rapport à d'éventuelles erreurs de câblage du réseau principal qui est par exemple un réseau Ethernet. Ainsi, grâce à cette configuration préalable, le serveur d'adressage connaîtra facilement et immédiatement la localisation des différents équipements de connexion. Cela lui permettra de localiser exactement l'équipement terminal envoyant une requête d'adresse réseau dès lors que l'équipement de connexion transmettant cette requête d'adresse réseau y aura ajouté la localisation de l'équipement terminal par rapport à l'équipement de connexion transmettant cette requête d'adresse réseau.

De préférence, ladite affectation d'adresse réseau est réalisée lors de l'installation dudit réseau, pour au moins l'un desdits équipements terminaux, de préférence pour plusieurs desdits équipements terminaux ou pour la majorité desdits équipements terminaux, encore plus de préférence pour tous lesdits équipements terminaux. Ainsi, lors de son installation, le temps de configuration du réseau, notamment le temps d'affectation d'une adresse réseau à chaque équipement terminal, est nettement réduit.

De préférence, ladite affectation d'adresse réseau est réalisée lors du remplacement d'un équipement terminal, pour l'équipement terminal remplaçant. Ainsi, lors de chaque remplacement d'un équipement terminal par un autre, cette affectation d'adresse est réalisée de manière rapide et fluide, maintenant quasiment en permanence le caractère totalement opérationnel du réseau.

De préférence, ledit équipement de connexion est un routeur ou un commutateur. Cet équipement de connexion est un équipement aiguillant les messages circulant dans le réseau.

De préférence, ledit réseau est un supercalculateur. L'invention est d'autant plus intéressante que le réseau considéré a besoin d'être opérationnel rapidement et de maintenir son caractère totalement opérationnel quasiment en permanence, ce qui est le cas d'un supercalculateur.

Ledit réseau comprend plus de 1000 desdits équipements terminaux, de préférence plus de 3000, plus de préférence plus de 10000. L'invention est d'autant plus intéressante que le réseau considéré comprend un grand nombre d'équipements terminaux. En effet, un grand nombre d'équipements terminaux dans le réseau entraîne d'une part une réduction importante du temps de configuration à l'installation qui sans cela peut être très élevé, et d'autre part réduit l'impact d'un nombre de pannes survenant dans ce réseau qui peut devenir notable dans l'absolu en raison du très grand nombre d'équipements terminaux dans le réseau, même si le taux de pannes reste très faible, proportionnellement au nombre d'équipements terminaux dans le réseau.

De préférence, ladite adresse réseau est une adresse IP.

De préférence, ladite requête est une requête DHCP. Le protocole DHCP comporte, au travers de son option 82, déjà la possibilité d'enrichir une requête avec un identifiant de l'équipement de connexion transmettant la requête (« identifiant éloigné » ou « remote_id » dans l'option 82 du protocole DHCP en langue anglaise) et un identifiant du port de connexion par lequel cette requête est arrivée (« identifiant circuit » ou « circuit_id » dans l'option 82 du protocole DHCP en langue anglaise). Ainsi l'implémentation de l'ajout de la localisation à une requête d'adresse réseau pourra être réalisée simplement grâce à l'utilisation du protocole DHCP.

De préférence, ledit réseau est un réseau Ethernet. Pour l'affectation des adresses réseau, les erreurs potentielles de câblage inhérentes au réseau Ethernet, qui sont handicapantes dans le cas de l'art antérieur utilisant les adresses MAC des équipements terminaux, sont rendues pratiquement transparentes avec l'utilisation alternative de la localisation des équipements terminaux.

Ledit équipement terminal a un identifiant unique qui est une adresse MAC laquelle n'est pas utilisée dans ledit procédé d'affectation. C'est l'utilisation de cette adresse MAC qui rend dans l'art antérieur cette étape d'affectation d'adresse réseau particulièrement longue et complexe, avec la nécessité d'une part de lister préalablement toutes les adresses MAC et d'autre part de s'adapter aux différents types d'adresses MAC correspondant aux différents types d'équipements terminaux.

De préférence, ledit équipement terminal est un serveur de calcul ou une baie de stockage de données ou un contrôleur matériel de l'un ou l'autre de ces équipements, par exemple un contrôleur matériel de serveur de calcul (de type BMC pour « Baseboard Management Control » en langue anglaise). Ce type d'équipement terminal doit pouvoir devenir vite opérationnel lors de son installation et rester indisponible le moins longtemps possible lors de son remplacement suite à une panne de matériel.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple de réseau selon un mode de réalisation de l'invention.
La figure 2 représente schématiquement un exemple de mise en oeuvre du procédé d'affectation d'adresse réseau à un équipement terminal du réseau selon un mode de réalisation de l'invention.

### DESCRIPTION DETAILLEE DE L'INVENTION

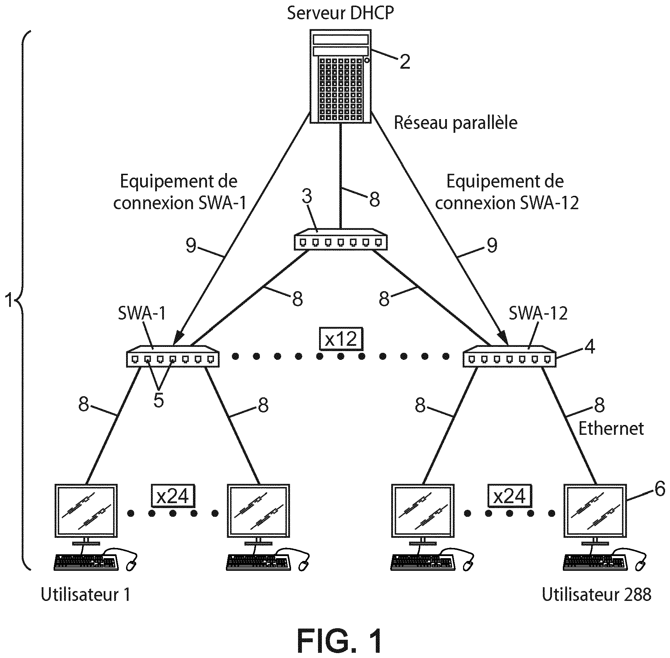

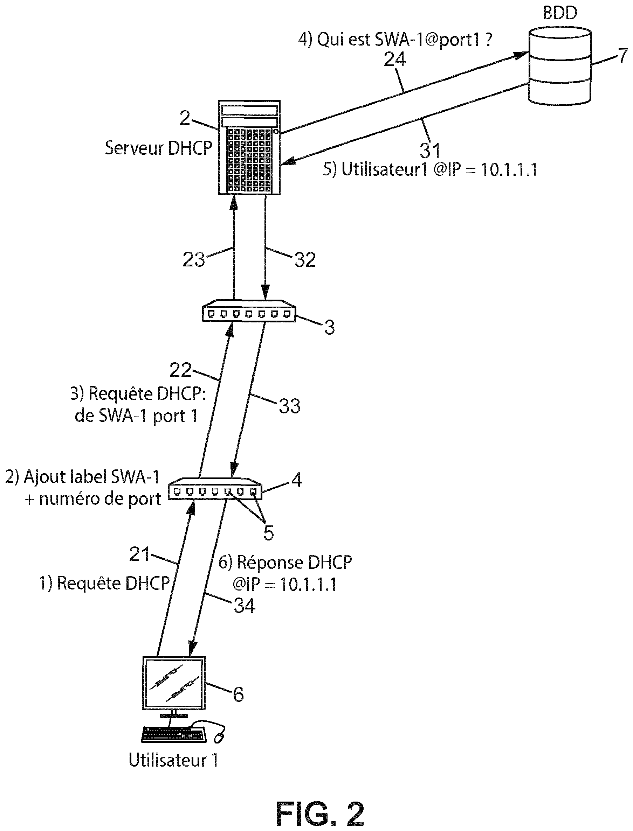

Dans les figures 1 et 2, le réseau est un réseau Ethernet, l'adresse réseau requise est une adresse IP, le protocole de communication entre l'équipement requérant une adresse réseau et le serveur d'adressage est le protocole DHCP.

La figure 1 représente schématiquement un exemple de réseau selon un mode de réalisation de l'invention. Le nombre d'équipements représentés est très faible pour ne pas nuire à la clarté de la figure 1. En réalité, le nombre d'équipements de connexion et d'équipements terminaux, et le nombre de niveaux d'équipements de connexion, sont nettement supérieurs à ceux qui sont représentés sur la figure 1. Il en sera de même pour les éléments représentés sur la figure 2. Le faible nombre d'éléments et de niveaux représentés sur les figures 1 et 2 est toutefois suffisant pour expliquer et comprendre le principe de l'invention.

Un réseau principal 1 comprend un serveur d'adressage 2, un équipement de connexion primaire 3, des équipements de connexion secondaires 4 ayant chacun un ou plusieurs ports de connexion 5, des équipements terminaux 6, des connexions principales 8 au sein du réseau Ethernet 1, des connexions annexes 9 au sein d'un autre réseau parallèle (réseau de type « sideband » en langue anglaise) distinct du réseau principal 1.

Les connexions annexes 9 sont des connexions fonctionnelles représentant l'existence du réseau parallèle (réseau de type « sideband » en langue anglaise) qui n'est pas structurellement représenté sur la figure 1 pour des raisons de clarté, mais seulement fonctionnellement par l'intermédiaire des connexions annexes 9.

Dans le réseau Ethernet 1, par l'intermédiaire des connexions principales 8, le serveur d'adressage 2 est connecté à l'équipement de connexion primaire 3, les équipements de connexion secondaires 4 sont connectés à l'équipement de connexion primaire 3, les équipements terminaux 6 sont connectés aux équipements de connexion secondaires 4 par l'intermédiaire des ports de connexion 5 que comprennent ces équipements de connexion secondaires 4.

Sur la figure 1, sont représentés un équipement de connexion primaire 3, 12 équipements de connexion secondaires 4, 288 équipements terminaux répartis en 12 groupes de 24 équipements terminaux respectivement connectés aux 12 équipements de connexion secondaires par l'intermédiaire des 24 ports de connexion 5 que comprend chaque équipement de connexion secondaire 4.

Les équipements de connexion secondaires 4 peuvent notamment être des commutateurs ou des routeurs, ce sont des équipements qui peuvent aiguiller la circulation des données vers d'autres équipements.

Les équipements terminaux 6 peuvent notamment être des serveurs de calcul, des contrôleurs matériels respectivement associés aux serveurs de calcul, des baies de stockage de données qui sont des mémoires de stockage de données ou des groupes de mémoires de stockage de données, des contrôleurs matériels respectivement associés aux baies de stockage de données. Un serveur de calcul peut aussi être appelé noeud de calcul.

Le balisage géographique du réseau Ethernet 1 est réalisé, par l'intermédiaire des connexions annexes 9, par le remplissage d'un champ d'identification de l'équipement de connexion principal 3 ou de l'équipement de connexion secondaire 4 (le champ « remote_id » en langue anglaise) du protocole DHCP.

Ces équipements de connexion 3 et 4 sont marqués avec des informations sur leur localisation dans l'armoire qu'ils occupent et dans la salle des machines dans laquelle ils sont placés. A chaque équipement de connexion 3 ou 4, est associé un identifiant topologique qui présente deux propriétés, à savoir d'une part localiser l'équipement de connexion 3 ou 4 dans le réseau Ethernet 1, et d'autre part être unique pour chaque équipement de connexion. Cet identifiant topologique est donc un différentiateur unique pour l'équipement de connexion auquel il est associé.

Par ailleurs, les équipements de connexion secondaires 4 sont configurés pour enrichir les requêtes d'adresse IP qu'ils reçoivent des équipements terminaux 6 par l'indication des numéros de ports de connexion 5 correspondants par lesquels ils ont respectivement reçus ces requêtes d'adresse IP.

Le serveur d'adressage intègre l'intelligence nécessaire pour lire et interpréter ces deux informations ajoutées que sont d'une part l'identifiant topologique de l'équipement de connexion secondaire 4 et d'autre part l'identifiant du port de connexion 5 par lequel la requête d'adresse IP est arrivée avant de lui être transmise.

La figure 2 représente schématiquement un exemple de mise en oeuvre du procédé d'affectation d'adresse IP à un équipement terminal du réseau selon un mode de réalisation de l'invention.

Un équipement terminal 6 dénommé « utilisateur 1 » (ou « user 1 » en langue anglaise) envoie une requête d'adresse IP vers l'équipement de connexion secondaire 4 auquel il est connecté par l'intermédiaire d'un des ports de connexion 5 de cet équipement de connexion secondaire 4. Cet envoi 21 de requête d'adresse IP correspond au premier message « Découverte » (« Discovery » en langue anglaise) de la session DORA du protocole DHCP.

L'équipement de connexion secondaire 4 ajoute à cette requête d'adresse IP une localisation de l'équipement terminal 6. La localisation de cet équipement terminal 6 comprend d'une part l'identifiant topologique de cet équipement de connexion secondaire 4 et d'autre part le numéro de ce port de connexion 5, ainsi qu'éventuellement une indication discriminante entre par exemple serveur de calcul et contrôleur matériel associé.

L'identifiant topologique est représentatif de la localisation de l'équipement de connexion secondaire 4 dans le réseau Ethernet 1 et a été attribué à cet équipement de connexion secondaire 4 lors de sa configuration par le serveur d'adressage 2 par l'intermédiaire des connexions annexes 9 du réseau parallèle (réseau de type « sideband » en langue anglaise).

Le numéro de port de connexion 5 est le numéro du port de connexion 5 par lequel cet équipement terminal 6 est connecté à cet équipement de connexion secondaire 4.

L'indication discriminante indique par exemple que c'est le serveur de calcul et non pas son contrôleur matériel qui requiert l'adresse IP, ou bien l'inverse selon le cas de figure, lorsque le serveur de calcul et son contrôleur matériel sont connectés à cet équipement de connexion secondaire 4 tous deux par l'intermédiaire d'un même port de connexion 5. L'indication discriminante est similaire pour distinguer entre une mémoire de stockage et son contrôleur matériel.

La requête d'adresse IP, à laquelle a été rajoutée dynamiquement la localisation de l'équipement terminal 6 par l'équipement de connexion secondaire 4, est transmise par l'équipement de connexion secondaire 4 à l'équipement de connexion primaire 3. Cette transmission 22 de la requête avec la localisation, de l'équipement de connexion secondaire 4 vers l'équipement de connexion primaire 3, est suivie d'une transmission 23 de la requête avec la localisation, de l'équipement de connexion primaire 3 vers le serveur d'adressage 2.

Le serveur d'adressage 2 est capable de comprendre et d'extraire cette localisation pour la transmettre à la base de données 7. Le serveur d'adressage 2 effectue un décodage en temps réel, redondé, de la localisation remontée avec la requête d'adresse IP.

Du serveur d'adressage 2 vers la base de données 7, est réalisé l'envoi 24 d'une demande d'association de l'adresse IP correspondant à la localisation accompagnant la requête d'adresse IP. La base de données 7 stocke, pour tous les équipements terminaux 6, la correspondance entre cette localisation et cette adresse IP. La base de données 7 renvoie au serveur d'adressage 2 l'adresse IP correspondant à la localisation reçue : c'est l'adresse IP de l'équipement terminal 6 dénommé « utilisateur 1 ». Cette adresse IP est transmise au serveur d'adressage 2 par l'intermédiaire d'un envoi 31 d'un message contenant l'adresse IP de l'équipement terminal 6 dénommé « utilisateur 1 », à savoir par exemple l'adresse IP « 10.1.1.1 ».

Le renvoi 32 d'une réponse du serveur d'adressage 2 à la requête d'adresse IP reçue, est ensuite effectué, cette réponse contenant cette adresse IP « 10.1.1.1 ». Cette réponse est renvoyée du serveur d'adressage 2 vers l'équipement de connexion principal 3 via lequel la requête d'adresse IP était arrivée. Une transmission 33 renvoie ensuite cette adresse IP « 10.1.1.1 » de l'équipement de connexion principal 3 vers l'équipement de connexion secondaire 4 via lequel la requête d'adresse IP était arrivée. Une transmission 34 renvoie ensuite cette adresse IP « 10.1.1.1 » de l'équipement de connexion secondaire 4 à l'équipement terminal 6 à l'origine de la requête d'adresse IP via le port de connexion 5 par lequel cette requête d'adresse IP avait été transmise.

A réception de son adresse IP « 10.1.1.1 », l'équipement terminal 6 dénommé « utilisateur 1 » est fonctionnellement complètement intégré dans le réseau Ethernet 1 et devient opérationnel dans ce réseau Ethernet 1. Des tâches de traitement de données, que ce soit des tâches de calcul si c'est un serveur de calcul ou des tâches de stockage de données si c'est une mémoire de stockage, peuvent lui être confiées.

Grâce au procédé d'affectation d'adresse IP, décrit en liaison avec la figure 2, la séquence automatique d'affectation de ces adresses IP à l'ensemble des équipements terminaux 6 du réseau Ethernet 1 a été optimisée. En effet, elle a été raccourcie et simplifiée. En cas de remplacement d'un équipement terminal 6 par un autre à cause d'une panne matérielle, l'affectation automatique de la nouvelle adresse IP de l'équipement remplaçant se déroulera elle aussi de manière plus courte et plus simple qu'avec le système de l'art antérieur. Le gain de temps et la simplification s'observent aussi bien lors de l'installation initiale du réseau Ethernet 1 que lors de sa maintenance au quotidien en réaction aux pannes matérielles qui surviennent en son sein.

Bien entendu, la présente invention n'est pas limitée aux exemples et au mode de réalisation décrits et représentés, mais elle est susceptible de nombreuses variantes accessibles à l'homme de l'art.

## Revendications

1. Procédé d'affectation, par un serveur d'adressage (2) d'un réseau (1), ledit réseau (1) comprenant plus de 1000 terminaux (6) et plusieurs niveaux d'équipement de connexion incluant au moins un équipement de connexion primaire (3) et des équipement de connexion secondaires (4), les équipements terminaux (6) étant connectés aux équipements de connexion secondaires (4) par l'intermédiaire de ports de connexion (5) que comprennent ces équipements de connexion secondaires (4), d'une adresse réseau à un équipement terminal (6) connecté à l'un des ports de connexion (5) de l'un des équipements de connexion secondaires (4) dudit réseau (1), comprenant :
- l'envoi (21) d'une requête d'adresse réseau par ledit équipement terminal (6) audit équipement de connexion secondaire (4),
- la détermination, par ledit équipement de connexion secondaire (4), d'une localisation dudit équipement terminal (6), ladite localisation associant un identifiant topologique dudit équipement de connexion secondaire (4) avec au moins un identifiant dudit port de connexion (5),
- la transmission (22), par ledit équipement de connexion secondaire (4), par l'intermédiaire de l'équipement de connexion primaire (3), vers ledit serveur d'adressage (2), de ladite requête avec ladite localisation,
- l'affectation (24, 31, 32, 33, 34), par ledit serveur d'adressage (2), audit équipement terminal (6), de ladite adresse réseau à partir de ladite localisation,
- ledit équipement terminal (6) ayant un identifiant unique qui est une adresse MAC laquelle n'est pas utilisée dans ledit procédé d'affectation,
- l'utilisation d'un autre réseau parallèle (9), qui est physiquement distinct dudit réseau (1), qui est un réseau point à point, pour configurer lesdits identifiants topologiques des différents équipements de connexion dudit réseau (1),
- ledit envoi (21) de ladite requête d'adresse réseau audit équipement de connexion secondaire (4) étant effectué automatiquement par ledit équipement terminal (6).

2. Procédé d'affectation selon la revendication 1, **caractérisé en ce que** ledit envoi (21) de ladite requête d'adresse réseau audit équipement de connexion secondaire (4) est effectué dès l'intégration dudit équipement terminal (6) audit réseau (1).

3. Procédé d'affectation selon l'une quelconque des revendications précédentes, **caractérisé en ce que** ledit réseau (1) comprend une base de données (7) qui stocke, pour au moins l'un desdits équipements terminaux (6), de préférence pour plusieurs desdits équipements terminaux (6) ou pour la majorité desdits équipements terminaux (6), encore plus de préférence pour tous lesdits équipements terminaux (6), une correspondance entre ladite localisation et ladite adresse réseau, ledit serveur d'adressage (2) envoie (24) ladite localisation à ladite base de données (7), ladite base de données (7) renvoie (31) ladite adresse réseau audit serveur d'adressage (2).

4. Procédé d'affectation selon l'une quelconque des revendications précédentes, **caractérisé en ce que** ledit serveur d'adressage (2) renvoie (32) ladite adresse réseau audit équipement terminal (6), en réponse à ladite requête, via ledit équipement de connexion secondaire (4).

5. Procédé d'affectation selon l'une quelconque des revendications précédentes, **caractérisé en ce que**, lors de ladite détermination, ladite localisation associe un identifiant topologique dudit équipement de connexion secondaire (4) avec un identifiant dudit port de connexion (5) et avec une discrimination entre plusieurs équipements terminaux (6) connectés audit équipement de connexion secondaire (4) par ledit même port de connexion (5), de préférence une discrimination entre serveur de calcul et contrôleur matériel dudit serveur de calcul connectés par un même port de connexion (5) audit équipement de connexion secondaire (4).

6. Procédé d'affectation selon l'une quelconque des revendications précédentes, **caractérisé en ce que** ladite affectation (24, 31, 32, 33, 34) d'adresse réseau est réalisée lors de l'installation dudit réseau (1), pour au moins l'un desdits équipements terminaux (6), de préférence pour plusieurs desdits équipements terminaux (6) ou pour la majorité desdits équipements terminaux (6), encore plus de préférence pour tous lesdits équipements terminaux (6), et/ou **caractérisé en ce que** ladite affectation (24, 31, 32, 33, 34) d'adresse réseau est réalisée lors du remplacement d'un équipement terminal (6), pour l'équipement terminal (6) remplaçant.

7. Procédé d'affectation selon l'une quelconque des revendications précédentes, **caractérisé en ce que** ledit réseau (1) est un supercalculateur, de préférence ledit réseau (1) comprend de préférence plus de 3000, plus de préférence plus de 10000.

8. Procédé d'affectation selon l'une quelconque des revendications précédentes, **caractérisé en ce que** ladite adresse réseau est une adresse IP.

9. Procédé d'affectation selon l'une quelconque des revendications précédentes, **caractérisé en ce que** ledit réseau (1) est un réseau Ethernet.

10. Système comprenant :
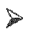 un réseau (1) comprenant :
- un serveur d'adressage (2),
- plus de 1000 équipements terminaux (6),
- plusieurs niveaux d'équipement de connexion incluant au moins un équipement de connexion primaire (3) et des équipements de connexion secondaires (4), les équipements terminaux (6) étant connectés aux équipements de connexion secondaires (4) par l'intermédiaire de ports de connexion (5) que comprennent ces équipements de connexion secondaires (4),
- au moins l'un desdits équipements terminaux (6), de préférence plusieurs desdits équipements terminaux (6) ou la majorité desdits équipements terminaux (6), encore plus de préférence tous lesdits équipements terminaux (6), étant adapté pour envoyer (21) automatiquement une requête d'adresse réseau à l'équipement de connexion secondaire (4) auquel il est connecté par un port de connexion (5),
- ledit équipement de connexion secondaire (4) étant adapté pour déterminer une localisation dudit équipement terminal (6), ladite localisation associant un identifiant topologique dudit équipement de connexion secondaire (4) avec au moins un identifiant dudit port de connexion (5), et pour transmettre (22), par l'intermédiaire de l'équipement de connexion primaire (3), vers ledit serveur d'adressage (2), ladite requête avec ladite localisation,
- ledit serveur d'adressage (2) étant adapté pour affecter (24, 31, 32, 33, 34), audit équipement terminal (6), ladite adresse réseau à partir de ladite localisation.
- ledit équipement terminal (6) ayant un identifiant unique qui est une adresse MAC laquelle n'est pas utilisée pour affecter (24, 31, 32, 33, 34), audit équipement terminal (6), ladite adresse réseau à partir de ladite localisation,
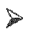 un autre réseau parallèle (9), physiquement distinct dudit réseau (1), point à point et utilisé pour configurer lesdits identifiants topologiques des différents équipements de connexion dudit réseau (1).

## Patentansprüche

1. Verfahren zur Zuweisung, durch einen Adressierungsserver (2) eines Netzwerks (1), wobei das Netzwerk (1) mehr als 1000 Endgeräte (6) und mehrere Verbindungseinrichtung-Ebenen umfasst, einschließlich wenigstens einer primären Verbindungseinrichtung (3) sowie sekundären Verbindungseinrichtungen (4), wobei die Endeinrichtungen (6) mit den sekundären Verbindungseinrichtungen (4) über Verbindungsports (5) verbunden sind, die von den sekundären Verbindungseinrichtungen (4) umfasst werden, von einer Netzwerkadresse an eine Endeinrichtung (6), die mit einem der Verbindungsports (5) von einer der sekundären Verbindungseinrichtungen (4) des Netzwerks (1) verbunden ist, umfassend :
- das Senden (21) einer Netzwerkadressanforderung durch die Endeinrichtung (6) an die sekundäre Verbindungseinrichtung (4),
- das Bestimmen eines Standorts der Endeinrichtung (6) durch die sekundäre Verbindungseinrichtung (4), wobei der Standort eine topologische Kennung der sekundären Verbindungseinrichtung (4) mit mindestens einer Kennung des Verbindungsports (5) verknüpft,
- die Übertragung (22) der Anforderung mit dem Standort durch die sekundäre Verbindungseinrichtung (4) vermittels der primären Verbindungseinrichtung (3) an den Adressierungsserver (2),
- die Zuweisung (24, 31, 32, 33, 34) der Netzwerkadresse, ausgehend von dem Standort, durch den Adressierungsserver (2) an die Endeinrichtung (6),
- wobei die Endeinrichtung (6) eine eindeutige Kennung aufweist, welche eine MAC-Adresse ist, die in dem Verfahren zur Zuweisung nicht verwendet wird,
- das Verwenden eines sich physisch von dem Netzwerk (1) unterscheidenden anderen parallelen Netzwerks (9), das ein Punkt-zu-Punkt-Netzwerk ist, um die topologischen Kennungen der verschiedenen Verbindungseinrichtungen des Netzwerks (1) zu konfigurieren,
- wobei das Senden (21) der Netzwerkadressanforderung an die sekundäre Verbindungseinrichtung (4) automatisch durch die Endeinrichtung (6) durchgeführt wird.

2. Verfahren zur Zuweisung nach Anspruch 1, **dadurch gekennzeichnet, dass** das Senden (21) der Netzwerkadressanforderung an die sekundäre Verbindungseinrichtung (4) ab der Integration der Endeinrichtung (6) in das Netzwerk (1) durchgeführt wird.

3. Verfahren zur Zuweisung gemäß einem der vorhergehenden Ansprüche, **dadurch gekennzeichnet, dass** das Netzwerk (1) eine Datenbank (7) umfasst, die für mindestens eine der Endeinrichtungen (6), vorzugsweise für mehrere der Endeinrichtungen (6) oder für die Mehrheit der Endeinrichtungen (6), noch mehr bevorzugt für alle Endeinrichtungen (6), eine Entsprechung zwischen dem Standort und der Netzwerkadresse speichert, wobei der Adressierungsserver (2) den Standort an die Datenbank (7) sendet (24), wobei die Datenbank (7) die Netzwerkadresse an den Adressierungsserver (2) zurückgibt (31).

4. Verfahren zur Zuweisung gemäß einem der vorhergehenden Ansprüche, **dadurch gekennzeichnet, dass** der Adressierungsserver (2) die Netzwerkadresse als Reaktion auf die Anforderung über die sekundäre Verbindungseinrichtung (4) an die Endeinrichtung (6) zurückgibt (32).

5. Verfahren zur Zuweisung nach einem der vorhergehenden Ansprüche, **dadurch gekennzeichnet, dass** bei der Bestimmung der Standort eine topologische Kennung der sekundären Verbindungseinrichtung (4) mit einer Kennung des Verbindungsports (5) verknüpft, und mit einer Unterscheidung zwischen mehreren Endeinrichtungen (6), die über den gleiche Verbindungsport (5) mit der sekundären Verbindungseinrichtung (4) verbunden sind, vorzugsweise einer Unterscheidung zwischen einem Berechnungsserver und einer Hardware-Steuerung des Berechnungsservers, die über einen gleichen Verbindungsport (5) mit der sekundären Verbindungseinrichtung (4) verbunden sind.

6. Verfahren zur Zuweisung gemäß einem der vorhergehenden Ansprüche, **dadurch gekennzeichnet, dass** die Netzwerkadressenzuweisung (24, 31, 32, 33, 34) bei der Installation des Netzwerks (1) für mindestens eine der Endeinrichtungen (6) durchgeführt wird, vorzugsweise für mehrere der Endeinrichtungen (6) oder für die Mehrheit der Endeinrichtungen (6), noch mehr bevorzugt für alle Endeinrichtungen (6), und/oder **dadurch gekennzeichnet, dass** die Netzwerkadressenzuweisung (24, 31, 32, 33, 34) beim Ersetzen einer Endeinrichtung (6) für die ersetzende Endeinrichtung (6) vorgenommen wird.

7. Verfahren zur Zuweisung nach einem der vorhergehenden Ansprüche, **dadurch gekennzeichnet, dass** das Netzwerk (1) ein Supercomputer ist, wobei vorzugsweise das Netzwerk (1) bevorzugt mehr als 3000 umfasst, mehr bevorzugt mehr als 10000.

8. Verfahren zur Zuweisung gemäß einem der vorhergehenden Ansprüche, **dadurch gekennzeichnet, dass** die Netzwerkadresse eine IP-Adresse ist.

9. Verfahren zur Zuweisung nach einem der vorhergehenden Ansprüche, **dadurch gekennzeichnet, dass** das Netzwerk (1) ein Ethernet-Netzwerk ist.

10. System umfassend:
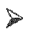 ein Netzwerk (1), umfassend:
- einen Adressierungsserver (2),
- mehr als 1000 Endeinrichtungen (6),
- mehrere Verbindungseinrichtung-Ebenen, die mindestens eine primäre Verbindungseinrichtung (3) sowie sekundäre Verbindungseinrichtungen (4) umfassen, wobei die Endeinrichtungen (6) mit den sekundären Verbindungseinrichtungen (4) über Verbindungsports (5) verbunden sind, die von den sekundären Verbindungseinrichtungen (4) umfasst werden,
- wobei mindestens eine der Endeinrichtungen (6), vorzugsweise mehrere der Endeinrichtungen (6) oder die Mehrheit der Endeinrichtungen (6), noch mehr bevorzugt alle Endeinrichtungen (6), dazu angepasst ist bzw. sind, automatisch eine Netzwerkadressanforderung an die sekundäre Verbindungseinrichtung (4) zu senden (21), mit der sie über einen Verbindungsport (5) verbunden ist bzw. sind,
- wobei die sekundäre Verbindungseinrichtung (4) angepasst ist, um einen Standort der Endeinrichtung (6) zu bestimmen, wobei der Standort eine topologische Kennung der sekundären Verbindungseinrichtung (4) mit mindestens einer Kennung des Verbindungsports (5) verknüpft, und um die Anforderung mit dem Standort über die primäre Verbindungseinrichtung (3) an den Adressierungsserver (2) zu übertragen (22),
- wobei der Adressierungsserver (2) angepasst ist, um der Endeinrichtung (6) die Netzwerkadresse ausgehend von dem Standort zuzuweisen (24, 31, 32, 33, 34),
- wobei das Endgerät (6) eine eindeutige Kennung aufweist, welche eine MAC-Adresse ist, die nicht verwendet wird, um die Netzwerkadresse ausgehend von dem Standort der Endeinrichtung (6) zuzuweisen (24, 31, 32, 33, 34),
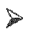 ein sich physisch von dem Netzwerk (1) unterscheidendes, anderes paralleles Netzwerk (9), das ein Punkt-zu-Punkt Netzwerk ist, und das verwendet wird, um die topologischen Kennungen der verschiedenen Verbindungseinrichtungen des Netzwerks (1) zu konfigurieren.

## Claims

1. Method of assigning, by an addressing server (2) of a network (1), said network (1) comprising more than 1000 terminals (6) and several levels of connection device including at least one primary connection device (3) and secondary connection devices (4), with the terminal devices (6) being connected to the secondary connection devices (4) by the intermediary of connection ports (5) that comprise these secondary connection devices (4), a network address to a terminal device (6) connected to one of the connection ports (5) of one of the secondary connection devices (4) of said network (1), comprising:
- sending (21) a request for network address by said terminal device (6) to said secondary connection device (4),
- determining, by said secondary connection device (4), a location of said terminal device (6), said location associating a topological identifier of said secondary connection device (4) with at least one identifier of said connection port (5),
- transmitting (22), by said secondary connection device (4), by the intermediary of the primary connection device (3), to said addressing server (2), said request with said location,
- assigning (24, 31, 32, 33, 34), by said addressing server (2), to said terminal device (6), said network address from said location,
- said terminal device (6) having a unique identifier which is a MAC address which is not used in said method of assigning,
- using another parallel network (9), which is physically separate from said network (1), which is a point-to-point network, in order to configure said topological identifiers of the various connection devices of said network (1),
- said sending (21) of said request for a network address to said secondary connection device (4) being carried out automatically by said terminal device (6).

2. Method of assigning according to claim 1, **characterised in that** said sending (21) of said request for network address to said secondary connection device (4) is carried out as soon as said terminal device (6) is integrated into said network (1).

3. Method of assigning according to any preceding claim, **characterised in that** said network (1) comprises a database (7) that stores, for at least one of said terminal devices (6), preferably for several of said terminal devices (6) or for most of said terminal devices (6), even more preferably for all of said terminal devices (6), a correspondence between said location and said network address, said addressing server (2) sends (24) said location to said database (7), said database (7) sends back (31) said network address to said addressing server (2).

4. Method of assigning according to any preceding claim, **characterised in that** said addressing server (2) sends back (32) said network address to said terminal device (6), in response to said request, via said secondary connection device (4).

5. Method of assigning according to any preceding claim, **characterised in that**, during said determining, said location associates a topological identifier of said secondary connection device (4) with an identifier of said connection port (5) and with a discrimination between several terminal devices (6) connected to said secondary connection device (4) by said same connection port (5), preferably a discrimination between calculation server and hardware controller of said calculation server connected by the same connection port (5) to said secondary connection device (4).

6. Method of assigning according to any preceding claim, **characterised in that** said assigning (24, 31, 32, 33, 34) of a network address is carried out during the installation of said network (1), for at least one of said terminal devices (6), preferably for several of said terminal devices (6) or for most of said terminal devices (6), even more preferably for all of said terminal devices (6), and/or **characterised in that** said assigning (24, 31, 32, 33, 34) of a network address is carried out during the replacing of a terminal device (6), for the replacing terminal device (6).

7. Method of assigning according to any preceding claim, **characterised in that** said network (1) is a supercomputer, preferably said network (1) preferably comprises more than 3000, more preferably more than 10,000.

8. Method of assigning according to any preceding claim, **characterised in that** said network address is an IP address.

9. Method of assigning according to any preceding claim, **characterised in that** said network (1) is an Ethernet network.

10. System comprising:
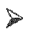 a network (1) comprising:
- an addressing server (2),
- more than 1000 terminal devices (6),
- several levels of connection device including at least one primary connection device (3) and secondary connection devices (4), with the terminal devices (6) being connected to the secondary connection devices (4) by the intermediary of connection ports (5) that comprise these secondary connection devices (4),
- at least one of said terminal devices (6), preferably several of said terminal devices (6) or most of said terminal devices (6), even more preferably all of said terminal devices (6), being adapted to send (21) automatically a request for network address to the secondary connection device (4) to which it is connected by a connection port (5),
- said secondary connection device (4) being adapted to determine a location of said terminal device (6), said location associating a topological identifier of said secondary connection device (4) with at least one identifier of said connection port (5), and for transmitting (22), by the intermediary of the primary connection device (3), to said addressing server (2), said request with said location,
- said addressing server (2) being adapted to assign (24, 31, 32, 33, 34), to said terminal device (6), said network address from said location,
- said terminal device (6) having a unique identifier that is a MAC address that is not used to assign (24, 31, 32, 33, 34), to said terminal device (6), said network address from said location,
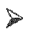 another parallel network (9), physically separate from said point-to-point network (1), and used to configure said topological identifiers of different connection devices of said network (1).
